# EUROPEAN PATENT APPLICATION

(11) **EP 1 344 566 A2**
(43) Date of publication of application: **17.09.2003**
(21) Application number: 03251550.4
(22) Date of filing: 13.03.2003
(51) Int. Cl.: B03B 9/06, B07B 9/00

(54) **Method and apparatus for sorting out shredder waste**

(30) Priority: 13.03.2002 JP 2002067787
(71) Applicant: FUJI JUKOGYO KABUSHIKI KAISHA, Tokyo-To (JP)
(72) Inventor: Okamura, Yoshinao, Fuji Jukogyo Kabushiki Kaisha, Tokyo-To (JP); Kita, Masakazu, Fuji Jukogyo Kabushiki Kaisha, Tokyo-To (JP)
(74) Representative: W.P. Thompson & Co.

(57) **Abstract**

An apparatus and a method for sorting out shredder waste allows for lower sorting cost and higher sorting accuracy to be achieved.

Shredder waste is fed into a hopper (2) to untangle it. The untangled shredder waste is quantatively supplied into a separating duct (6) wherein the shredder waste is subjected to steam by a steam injector so as to be further untangled. The shredder waste that has been further untangled in the separating duct is carried, while being agitated, into a striker (7). In the striker (7), the shredder waste is struck by chains (7d) that swing as a rotating shaft rotates, so that harness waste or the like is separated from the shredder waste. The separated harness waste or the like is transferred onto a conveyor (8) through an outlet. On the conveyor (8), the harness waste is separated from heavy materials, such as rubber and rigid plastics.

## Description

### BACKGROUND OF THE INVENTION

### 1. Field of the Invention

The present invention relates to a method and an apparatus effectively used for sorting out nonferrous metal waste, such as harness waste, in particular, from shredder waste produced when scrapping cars or the like.

### 2. Description of the Related Art

Before recycling shredder waste to be used as fuel or the like, it is necessary to sort out the harness waste sheathed with polyvinyl chloride from the shredder waste in order to prevent dioxin from being generated or to prevent the harness waste from adhering to the fire grates of a processing furnace.

It is not feasible to remove the harness waste before scrapping cars, because it would increase scrapping time. For this reason, harness waste is usually sorted out after scrapping cars, that is, after processing shredder waste.

Japanese Unexamined Patent Application Publication No. 8-117695, for example, discloses one such method for sorting out harness waste from the shredder waste. According to the sorting method, shredder waste is held in a hopper while being vibrated and brought close to a coil through which high-frequency currents are passing so as to selectively heat metal waste in the shredder waste. The increased temperature of the metal waste is detected by a temperature sensor in order to separate metal waste from nonmetal waste. Alternatively, a known proximity sensor using a magnetic field or an electric field is used to separate metal waste from nonmetal waste. Then, metal waste is magnetically sorted out into metal waste, such as iron, and nonferrous metal waste, such as copper. The nonferrous metal waste is further crushed by a shredder, sieved, and sorted out by specific gravity into various types of metals.

However, according to the sortingmethod described above, nonferrous metal waste, such as harness waste, in particular, is sorted out after it is completely crushed, requiring a high sorting cost. Furthermore, it is difficult to loosen entangled shredder waste simply by shaking it, thus it is not easy to selectively heat predetermined types of shredder waste, inevitably resulting in deteriorated sorting accuracy.

In addition, according to the aforesaid method, contaminated shredder waste adversely affects thermal conduction, making it difficult to maintain a constant heating temperature.
Harness waste sheathed with polyvinyl chloride must be sorted out to prevent the polyvinyl chloride from sticking to the furnace and to prevent dioxin from being produced when recycling the shredder waste to be used as fuel.

### SUMMARY OF THE INVENTION

Accordingly, it is an object of the present invention to provide a method and an apparatus for sorting out shredder waste with high accuracy at low cost.

To this end, one aspect of the present invention provides a method for sorting out shredder waste, including a first untangling step for placing shredder waste into a hopper equipped with a crushing feature to untangle the shredder waste, a second untangling step for supplying the shredder waste from the hopper into a cylindrical separating duct to subject the waste to steam ejected at a high speed, and conveying the shredder waste while mixing it at the same time, and a third untangling step for placing the shredder waste, which has been conveyed through the separating duct, into a striker.

With this arrangement, unlike a method in which shredder waste is sorted out after crushing, it is possible to sort out shredder waste while it still has its original form, thus permitting lower sorting cost. Moreover, shredder waste is untangled in the first through third steps, resulting in improved sorting accuracy. In addition, according to the inventive sorting method, shredder waste is appropriately moistened by steam, advantageously suppressing waste from scattering.

In a preferred form, the shredder waste that has been subjected to the above-mentioned steps is sorted out by carrying it on a mesh conveyor that has a meshed carrying surface that tilts to the right or left and undulates. Thus, the shredder waste can be sorted out while it still has its original form, so that the sorting cost can be reduced.

Another aspect of the present invention provides an apparatus for sorting out shredder waste, including a hopper which has adjacently disposed spiral shafts rotating in opposite directions from each other and into which shredder waste is fed; a separating duct having a rotary drum which conveys the shredder waste supplied through an outlet of the hopper while mixing the shredder waste and which has spiral projections on the inner surface of a wall thereof; a steam injector that is connected to the separating duct and which emits steam toward an entire inlet of the separating duct connected to the outlet of the hopper; and a rotary striker that has, in an upper portion thereof, an inlet for receiving shredder waste discharged from the separating duct and an outlet through which a part of the shredder waste is discharged, a rotating shaft which is vertically provided under the inlet and the outlet and on one side of which are connected a plurality of chains that rotates with the rotating shaft, and another outlet provided below the chains.

With this arrangement, the sorting cost will be lower and the sorting accuracy will be improved.

In a preferred form, the apparatus for sorting out shredder waste further includes a conveyor for carrying shredder waste discharged from the outlet below the chains of the rotary striker, wherein the conveyor has a meshed carrying surface that tilts either to right or left and undulates.

With this arrangement, the shredder waste can be sorted out while it still has its original form, so that the sorting cost can be reduced.

By way of example only, a specific embodiment of the present invention will now be described, with reference to the accompanying drawings, in which:

### BRIEF DESCRIPTION OF THE DRAWINGS

Fig. 1 is a block diagram of a shredder waste sorting system including a shredder waste sorting apparatus in accordance with an embodiment of the present invention;
Fig. 2 is a schematic plan view (A) and a sectional side elevational view (B) of a hopper provided with a crushing feature of the shredder waste sorting apparatus;
Fig. 3 is a partly enlarged view of a hot steam generator of the shredder waste sorting apparatus;
Fig. 4 is a sectional elevation view of a rotary striker of the shredder waste sorting apparatus;
Fig. 5 is a sectional view taken at line A-A of Fig. 4;
Fig. 6 is a perspective illustration of a mesh conveyor of the shredder waste sorting apparatus; and
Fig. 7 is a schematic elevational view showing the operation of the mesh conveyor of Fig. 6.

### DESCRIPTION OF THE PREFERRED EMBODIMENTS

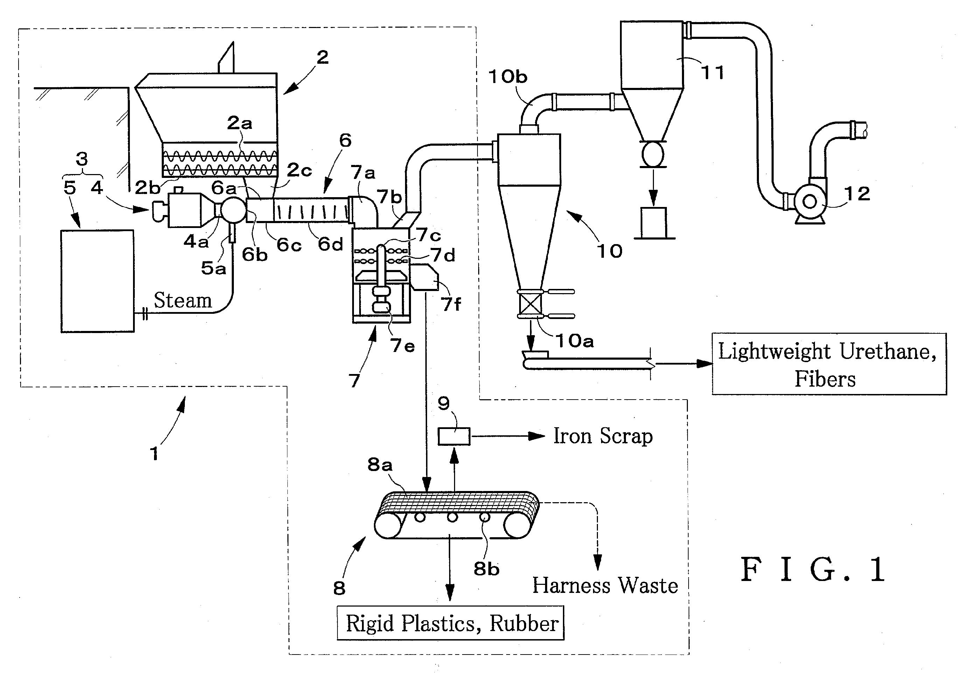

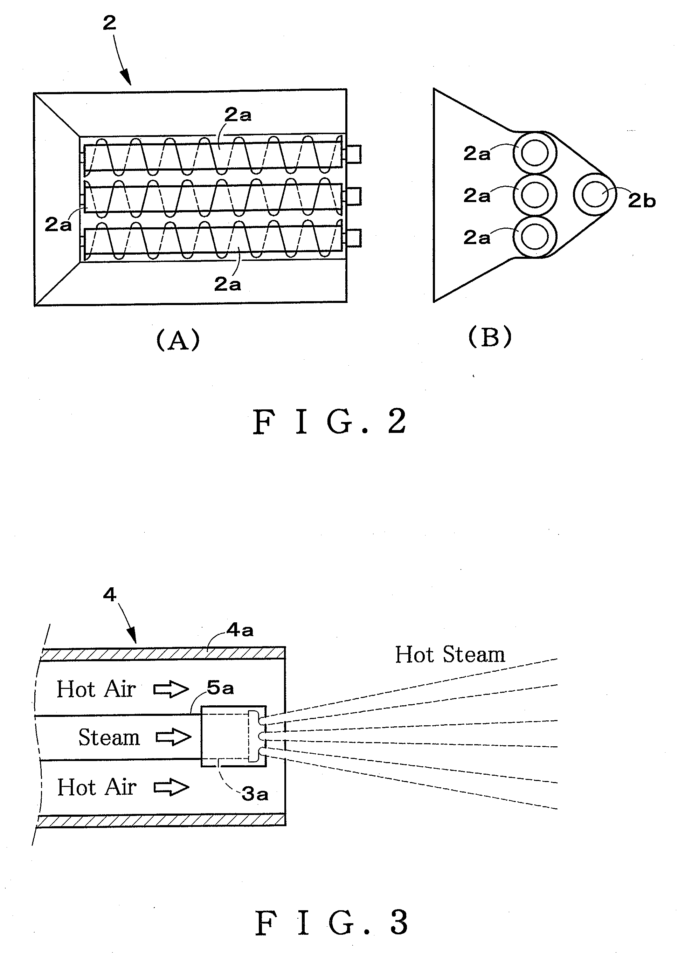

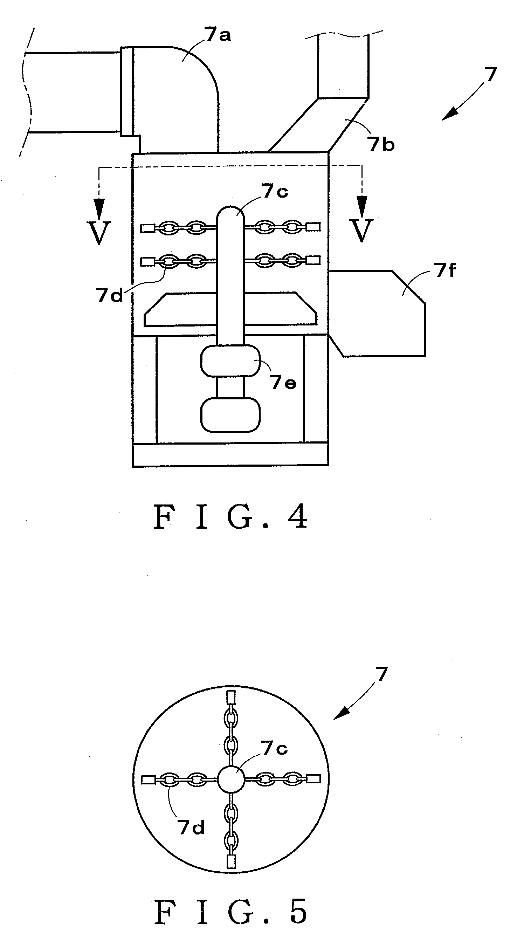

An apparatus for sorting out shredder waste in accordance with an embodiment of the present invention will be described with reference to Fig. 1 through Fig. 7. Fig. 2 (A) is a plan view of a hopper and Fig. 2(B) is a side view of the hopper. Fig. 4 is a front sectional view of a rotary striker and Fig. 5 is a sectional view taken at line A-A in Fig. 4A.

A processing system incorporating the sorting apparatus has the construction shown in Fig. 1. A sorting apparatus 1 includes a hopper 2 with a crushing feature, a steam injector 3, a separating duct 6, a rotary striker 7 and a conveyor 8.

The hopper 2 with the crushing feature has a plurality of spiral shafts, namely, three screw shafts 2a, as shown in Fig. 2. These screw shafts 2a are adjacently disposed such that they rotate in opposite directions from each other to untangle fed shredder waste.

The hopper 2 is tapered toward its bottom. At the bottom, a transfer device 2b formed of a single screw shaft for transferring shredder waste from one end to the other end is disposed in parallel to the screw shaft 2a. Beneath the transfer device 2b, an outlet 2c connected to an inlet 6a of the separating duct 6 is provided at one end of the bottom surface of the hopper 2.

The screw shafts 2a repeat synchronized forward rotation and reverse rotation at predetermined time intervals. The transfer device 2b functions as a constant-quantity feeder for quantitatively feeding untangled shredder waste through the inlet 6a into the drying and separating duct 6 via an outlet 2c.

The steam injector 3 in this embodiment is constructed of an auxiliary heat source unit 4, such as a combustion burner, connected to the inlet 6b of the separating duct 6 through the intermediary of a duct 4a, and a steam boiler 5 connected through the intermediary of a steam pipe to a duct 5a, which is inserted through the side wall of the duct 4a and bent at the middle of the duct 4a and the distal end of which is provided in the vicinity of the inlet 6b.

According to the embodiment, as shown in detail in Fig. 3, a wide-angle jet nozzle assembly 3a formed of an array of three jet nozzles is disposed at the distal end of the duct 5a so as to form a passage of hot air from the auxiliary heat source unit 4 in the duct 4a outside the duct 5a.

With this arrangement, the steam injected through the wide-angle jet nozzle assembly 3a and the hot air drawn in due to the steam jet cause a jet of steam of about 170°C to about 250°C to be produced. For example, the jet steam is set at about 200°C with 0.4 to 0.5 MPa. The jet of steam is injected into the separating duct 6 through the inlet 6b.

Although the auxiliary heat source unit 4 is provided in this embodiment, the auxiliary heat source unit 4 is not usually used except for a case where shredder waste is wet and contains a lot of water.

The separating duct 6 is constructed of a hollow cylindrical chamber 6c having the inlet 6a for untangled shredder waste fed from the hopper 2 and the inlet 6b through which a jet of hot steam comes out, and a rotating drum 6d into which an end of the hollow cylindrical chamber 6c is inserted, spiral projections being provided on the inner wall thereof. Steam is injected into the duct 6.

Based on the information regarding moisture content received from a water content sensor disposed at an appropriate position of the separating duct 6, the rotational speed of the rotating drum 6d is changed, the amount of time required for shredder waste to remain in the drying and separating duct 6 is adjusted, and the auxiliary heat source unit 4 is operated to dry the shredder waste.

An arrangement is made such that, when the steam from the wide-angle jet nozzle 3a is injected into the separating duct 6, the injected steam reaches the entire inlet 6a so as to further untangle the shredder waste, which is fed through the inlet 6a in a pre-untangled state, by the jet of steam.

The outlet of the separating duct 6 that is provided at the opposite position from the inlet 6b is connected to an inlet 7a of the rotary striker 7.

As shown in the enlarged view of Figs. 4 and 5, the rotary striker 7 is constructed of a hollow cylindrical chamber having the inlet 7a for the shredder waste discharged from the separating duct 6 and the outlet 7b for lightweight urethane and fibers, the inlet 7a and the outlet 7b being provided in the top surface. A rotating shaft 7c vertically extends toward the bottom from a level below the inlet 7a and the outlet 7b. A plurality of chains 7d that is provided along the rotating shaft 7c radially swings with respect to the rotating shaft 7c as the rotating shaft 7c rotates. A driver 7e of the rotating shaft 7c is provided at the bottom portion of the rotating shaft 7c. An outlet 7f for collecting harness waste or the like is provided in the side wall at a height below the chain 7d right above the bottom of the hollow cylindrical chamber.

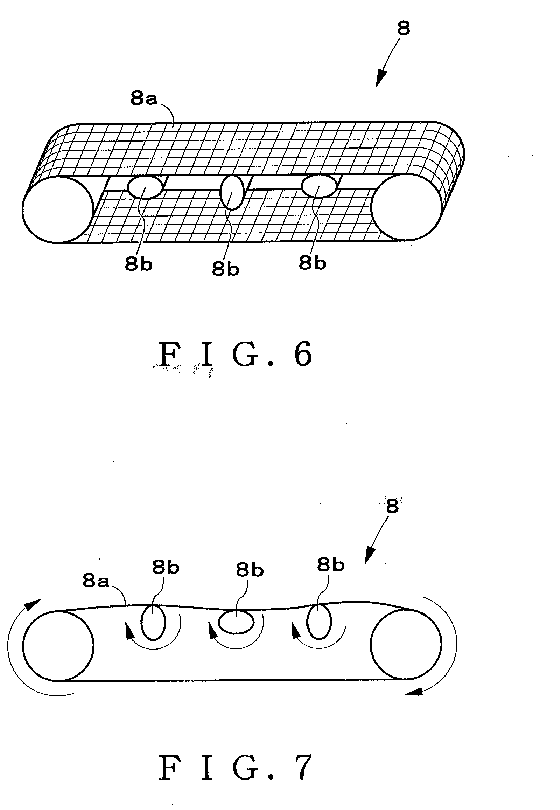

A conveyor 8 is disposed to receive the shredder waste coming out of the outlet 7f of the striker 7. As shown in detail in Fig. 6, a carrying surface 8a is inclined to the right at 25 to 45 degrees in the conveying direction in the drawing. That is, the carrying surface 8a is inclined to one side with respect to the conveying direction. And eccentric rollers 8b for causing the carrying surface 8a to undulate are disposed at appropriate intervals. The conveyor 8 having the inclined carrying surface 8a that undulates makes it possible to separate harness waste from heavy materials, such as rubber and rigid plastics. Thus, the heavy materials, including rubber and rigid plastics, fall off the inclined carrying surface 8a of the conveyor 8 during transport, while the harness waste remains on the carrying surface 8a until it is discharged from the conveyor 8. The conveyor 8 is provided with a magnetic sorter 9 to sort out and remove iron scrap and the like.

In this system, a cyclone 10 performing a sorting operation by centrifugal action is connected to the outlet 7b of the striker 7 of the sorting apparatus 1. A suction blower 12 is connected to the cyclone 10 through the intermediary of a dust collector 11, and an exhaust deodorizing tower (not shown) is connected to the suction blower 12.

The method using the sorting apparatus 1 for sorting out shredder waste will now be explained in conjunction with Fig. 1.

When shredder waste is fed into the hopper 2, the shredder waste is untangled by the screw shafts 2a in the hopper 2 (first untangling step), and the untangled shredder waste falls onto the transfer device 2b to be quantatively discharged through the outlet 2c by the transfer device 2b, then supplied into the inlet 6a of the separating duct 6. Steam is sprayed onto the untangled shredder waste that has fallen into the separating duct 6 from the inlet 6a. This further loosens the shredder waste under the steam spray (second untangling step).

The loosened shredder waste is conveyed while being agitated by the rotating drum 6d of the separating duct 6. Based on the moisture content information provided by the water content sensor installed in the separating duct 6, the rotational speed of the rotating drum is changed, the amount of time for the shredder waste to remain in the separating duct 6 is adjusted, and the shredder waste is heated and dried.

The shredder waste fed from the separating duct 6 falls into the striker 7 through the inlet 7a. In the striker 7, in particular, the shredder waste entangled with harness waste or the like, is repeatedly struck by impact forces applied by the chains 7d that swing around as the rotating shaft 7c rotates. As the shredder waste is repeatedly struck and agitated, the harness waste or the like is separated from the shredder waste (third untangling step).

The harness waste and heavy materials, such as rubber and rigid plastics, that have dropped onto the bottom of the striker 7, are transferred onto the conveyor 8 through the outlet 7f provided below the chains 7d on the side wall near the bottom. The conveyor 8 separates the harness waste from the heavy materials, including rubber and rigid plastics.

More specifically, the heavy materials, such as rubber and rigid plastics, fall off the inclined carrying surface 8a of the conveyor 8 during transport, while the harness waste is held on the carrying surface 8a by the meshed surface. Then, iron scrap or the like is removed by the magnetic sorter 9, and the harness waste is discharged from the conveyor 8.

The striker 7 is subjected to the suction force of the suction blower 12 through the outlet 7b provided at the top, so that lightweight urethane, fibers or dust contained in the shredder waste that has become airborne due to the repeated striking and agitating in the striker 7 pass through the outlet 7b into the cyclone 10.

In the cyclone 10, lightweight urethane or fibers onto which a large centrifugal force acts spirally descend along the inner wall of the cyclone 10, and leave through a lower outlet 10a.

Foul-smelling air or the like containing dust is exhausted through an upper outlet 10b, and the dust contained therein is removed by the dust collector 11. The air is then deodorized by the exhaust deodorizing tower, and only clean air is released into the atmosphere, while moisture resulting from condensation by cooling is drained.

Thus, unlike the method for sorting out after crushing shredder waste, the method for sorting out shredder waste and the apparatus for implementing the method in accordance with the present invention allow shredder waste to be sorted out while it still has its original form. This permits lower sorting cost to be achieved and harness waste to be securely removed. Hence, furnaces will not be damaged, and dioxin will not be generated when shredder waste is recycled for fuel.

## Claims

1. A method for sorting out shredder waste, comprising:
a first untangling step for placing shredder waste into a hopper equipped with a crushing feature to untangle the shredder waste;
a second untangling step for supplying the shredder waste from the hopper into a cylindrical separating duct to subject it to steam, and conveying the shredder waste while agitating it at the same time; and
a third untangling step for placing the shredder waste, which has been conveyed through the separating duct, into a striker.

2. The method for sorting out shredder waste according to Claim 1, wherein the shredder waste that has been subjected to the untangling steps is placed on a mesh conveyor to be conveyed and sorted, the conveyor having a meshed carrying surface that tilts either to the right or left sides with respect to the conveying direction and undulates.

3. An apparatus for sorting out shredderwaste, comprising:
a hopper which has adjacently disposed spiral shafts rotating in opposite directions from each other and into which shredder waste is fed;
a separating duct having a rotary drum which conveys the shredder waste supplied through an outlet of the hopper while agitating it and which has spiral projections on the inner surface of a wall thereof;
a steam injector that is connected to the separating duct and which emits steam toward an entire inlet of the separating duct connected to the outlet of the hopper; and
a rotary striker that has, in an upper portion thereof, an inlet for receiving shredder waste discharged from the separating duct and an outlet through which a part of the shredder waste is discharged, a rotating shaft which is vertically provided under the inlet and the outlet and to which ends on one side of which are connected a plurality of chains that rotates with the rotating shaft, and another outlet provided below the chains.

4. The apparatus for sorting out shredder waste according to Claim 3, further comprising:
a conveyor for carrying shredder waste discharged from the outlet below the chains of the rotary striker, wherein the conveyor has a meshed carrying surface that tilts either to the right or left sides to the conveying direction and undulates.
